# EUROPEAN PATENT APPLICATION

(11) **EP 4 579 241 A1**
(43) Date of publication of application: **02.07.2025**
(21) Application number: 23855847.2
(22) Date of filing: 26.05.2023
(51) Int. Cl.: G01N 35/00

(54) **AUTOMATIC ANALYSIS DEVICE AND CONTROL METHOD FOR SAME**

(30) Priority: 26.08.2022 JP 2022135055
(71) Applicant: HITACHI HIGH-TECH CORPORATION, Tokyo 105-6409 (JP)
(72) Inventor: AKIMOTO, Maki, Tokyo 105-6409 (JP); MISHIMA, Hiroyuki, Tokyo 105-6409 (JP); SUZUKI, Naoto, Tokyo 105-6409 (JP); ITO, Masayuki, Tokyo 105-6409 (JP)
(74) Representative: Strehl & Partner mbB
(86) International application number: PCT/JP2023/019594
(87) International publication number: WO 2024/042801

(57) **Abstract**

An object of the present invention is to provide an automatic analyzer capable of more accurately obtaining time required for a pre-operation from reception of an analysis instruction to start of analysis. The automatic analyzer includes an analysis module that analyzes a sample, a control unit that controls the analysis module, and a display unit that displays a state of the analysis module. The control unit performs control to calculate remaining time until the pre-operation is completed based on time required for operation confirmation of various mechanisms of the analysis module and display the remaining time on the display unit.

## Description

### Technical Field

The present invention relates to an automatic analyzer for analyzing a specimen such as blood, urine, or cerebrospinal fluid, and in particular to a function of displaying a state of the automatic analyzer.

### Background Art

In an automatic analyzer, since a plurality of specimens are automatically analyzed according to a preset analysis order or analysis conditions, an operator can leave the automatic analyzer and perform other work during automatic analysis. There is an automatic analyzer that estimates and presents an analysis end time based on a pre-analysis preparation time from an instruction to start analysis to start of analysis and an analysis time required to execute the analysis. It is preferable that the analysis end time is estimated accurately, because an operator who leaves the automatic analyzer to perform other work and then returns to the automatic analyzer around the analysis end time can efficiently perform work such as replacing specimens and processing an analysis result.

PTL 1 discloses an automatic analyzer that accurately estimates and presents an analysis end time. Specifically, a pre-analysis preparation time is stored in association with a transition state of an analysis condition, for example, a set temperature of a column oven, and an analysis end time is estimated based on the pre-analysis preparation time read out according to the transition state of the analysis condition and an analysis time. If the set temperature is not changed, the pre-analysis preparation time is short since it is not necessary to raise or lower a temperature of the column oven. However, if the set temperature is changed, the pre-analysis preparation time is long since a time is required for raising and lowering the temperature. That is, the analysis end time is accurately estimated by using the pre-analysis preparation time read out according to the transition state of the analysis condition.

### Citation List

### Patent Literature

PTL 1: JP2005-227211A

### Summary of Invention

### Technical Problem

However, PTL 1 does not consider a time required for operation confirmation of various mechanisms such as a dispensing probe and a reaction disk. If an initial position of the dispensing probe or the reaction disk is displaced or if an abnormality occurs in a pressure sensor of the dispensing probe, analysis is hindered, and it is necessary to confirm operations of various mechanisms in a pre-operation, which is a preparation operation before the analysis.

An object of the invention is to provide an automatic analyzer capable of more accurately obtaining a time required for a pre-operation from reception of an analysis instruction to start of analysis.

### Solution to Problem

In order to achieve the above object, the invention provides an automatic analyzer including: an analysis module configured to analyze a sample, a control unit configured to control the analysis module, and a display unit configured to display a state of the analysis module. The control unit performs control to calculate remaining time until the pre-operation is completed based on time required for operation confirmation of various mechanisms of the analysis module and display the remaining time on the display unit.

The invention provides a control method of an automatic analyzer including an analysis module configured to analyze a sample and a display unit configured to display a state of the analysis module. The control method includes: calculating remaining time until a pre-operation is completed based on time required for operation confirmation of various mechanisms of the analysis module; and displaying the remaining time on the display unit.

### Advantageous Effects of Invention

According to the invention, it is possible to provide an automatic analyzer capable of more accurately obtaining a time required for a pre-operation from reception of an analysis instruction to start of analysis.

### Brief Description of Drawings

[FIG. 1] FIG. 1 is a diagram showing a configuration example of an automatic analyzer.
[FIG. 2] FIG. 2 is a diagram showing an example of a flow of processing according to a first embodiment.
[FIG. 3] FIG. 3 is a diagram showing an example of a pre-operation table.
[FIG. 4] FIG. 4 is a diagram showing an example of a screen displaying remaining time according to the first embodiment.
[FIG. 5] FIG. 5 is a diagram supplementarily showing remaining time display according to the first embodiment.
[FIG. 6] FIG. 6 is a diagram showing an example of a flow of processing according to a second embodiment.
[FIG. 7] FIG. 7 is a diagram showing an example of a post-operation table.
[FIG. 8] FIG. 8 is a diagram supplementarily showing remaining time display according to the second embodiment.
[FIG. 9] FIG. 9 is a diagram showing an example of a flow of processing according to a third embodiment.
[FIG. 10] FIG. 10 is a diagram supplementarily showing remaining time display according to the third embodiment.
[FIG. 11] FIG. 11 is a diagram showing another example of the flow of the processing according to the third embodiment.
[FIG. 12] FIG. 12 is a diagram supplementarily showing the remaining time display according to the third embodiment.
[FIG. 13] FIG. 13 is a diagram showing an example of a flow of processing according to a fourth embodiment.
[FIG. 14] FIG. 14 is a diagram showing an example of a screen displaying remaining time according to the fourth embodiment.
[FIG. 15] FIG. 15 is a diagram supplementarily showing remaining time display according to the fourth embodiment.

### Description of Embodiments

Hereinafter, embodiments of an automatic analyzer according to the invention will be described with reference to the accompanying drawings.

### Embodiment 1

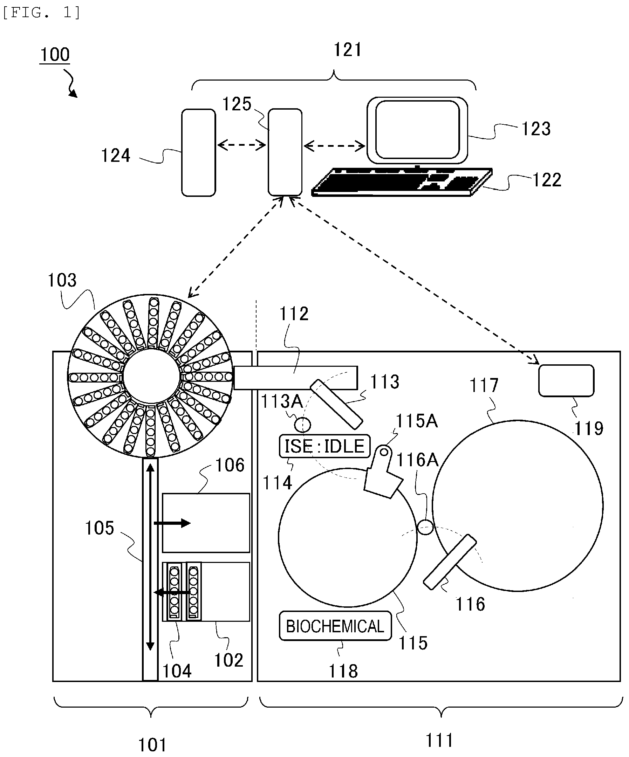

A configuration example of an automatic analyzer 100 will be described with reference to FIG. 1. The automatic analyzer 100 is a device that performs qualitative and quantitative analysis of a specimen such as blood, urine, or cerebrospinal fluid, and includes a transport module 101, an analysis module 111, and an operation module 121. A plurality of analysis modules 111 may be provided, and the transport module 101 may be omitted. Hereinafter, each module will be described.

The transport module 101 is a module that transports a specimen rack 104 on which a specimen container containing a specimen is mounted to the analysis module 111, and includes a rack supply tray 102, a rack buffer 103, a transport line 105, and a rack storage tray 106.

The rack supply tray 102 accumulates specimen racks 104 to be loaded into the automatic analyzer 100 and supplies the specimen racks 104 to the transport line 105. When there is no transport module 101, the specimen rack 104 is loaded into the analysis module 111.

The transport line 105 transports the specimen rack 104 between the rack supply tray 102 and the rack storage tray 106 and the rack buffer 103. The transport line 105 may be provided with a sensor for identifying whether a specimen container is mounted on the specimen rack 104 and a barcode reader for reading a barcode on the specimen container. The barcode on the specimen container is associated with identification information on the specimen, and a patient can be specified by reading the barcode.

The rack buffer 103 has a structure for holding the specimen racks 104 carried in by the transport line 105 and carrying out the specimen rack 104 designated from the specimen racks 104 to the analysis module 111 or the transport line 105. For example, the rack buffer 103 has a structure that is a circular ring in which a plurality of slots for holding the specimen rack 104 are provided in a radial shape and is rotatable around a central axis of the circular ring.

The rack storage tray 106 accumulates the specimen rack 104 carried out from the rack buffer 103.

The analysis module 111 is a module that analyzes a specimen contained in a specimen container, and includes a specimen dispensing line 112, a specimen dispensing probe 113, an analysis unit, a reaction disk 115, a reagent dispensing probe 116, a reagent disk 117, and an analysis module control unit 119. The analysis unit includes at least one of an electrolyte measurement unit 114, a biochemical measurement unit 118, an immunoassay unit, and a blood coagulation analysis unit.

The specimen dispensing line 112 transports the specimen rack 104 carried out from the rack buffer 103.

The specimen dispensing probe 113 dispenses the specimen in the specimen container mounted on the specimen rack 104 transported by the specimen dispensing line 112 to a reaction container of the reaction disk 115 or the electrolyte measurement unit 114. In order to dispense the specimen from the specimen container to the reaction container or the electrolyte measurement unit 114, the specimen dispensing probe 113 has a structure that allows vertical movement and rotational movement. The electrolyte measurement unit 114 measures an electromotive force of the specimen. The specimen dispensing probe 113 that dispenses the specimen is cleaned in a specimen dispensing probe cleaning tank 113A.

The reagent disk 117 is a cooler that keeps a plurality of reagent bottles, each of which contains a reagent to be reacted with the specimen, cool. The reagent disk 117 has a rotatable structure in order to move a reagent bottle designated from among a plurality of reagent bottles to a position accessible by the reagent dispensing probe 116.

The reagent dispensing probe 116 dispenses the reagent in the reagent bottle into the reaction container into which the specimen is dispensed. In order to dispense the reagent from the reagent bottle to the reaction container, the reagent dispensing probe 116 has a structure that allows vertical movement and rotational movement. The reagent dispensing probe 116 into which the reagent is dispensed is cleaned in a reagent dispensing probe cleaning tank 116A.

The reaction disk 115 has a plurality of reaction containers, and keeps the reaction containers warm in order to promote a reaction between the specimen and the reagent in the reaction containers. Optical characteristics of a reaction liquid produced by the reaction between the specimen and the reagent are measured by the biochemical measurement unit 118. The reaction container containing the reaction liquid after the measurement is aspirated and cleaned in a reaction disk cleaning unit 115A. The reaction disk 115 has a rotatable structure in order to move the reaction container to a position accessible by the biochemical measurement unit 118, the reaction disk cleaning unit 115A, the specimen dispensing probe 113, and the reagent dispensing probe 116.

The analysis module control unit 119 controls operations of various mechanisms in the analysis module 111 and transmits measurement results from the analysis unit to the operation module 121, and is implemented by, for example, a micro processor unit (MPU).

The operation module 121 is a module that controls the transport module 101 and the analysis module 111 according to an instruction from an operator, and includes an input unit 122, a display unit 123, a storage unit 124, and a control unit 125.

The input unit 122 is a device to which an instruction from an operator is input, and is implemented by, for example, a keyboard, a mouse, and a touch panel.

The display unit 123 is a device that displays analysis conditions set via the input unit 122, a state of the analysis module 111, a measurement result from the analysis unit, and the like, and is implemented by, for example, a liquid crystal monitor or a touch panel.

The storage unit 124 is a device that stores a program and data used for controlling the transport module 101 and the analysis module 111, measurement results from the analysis unit, and the like, and is implemented by, for example, a hard disk drive (HDD) and a solid state drive (SSD) .

The control unit 125 is a device that controls each unit, and is implemented by, for example, a central processing unit (CPU). Under the control of the control unit 125, the analysis module 111 transitions from a standby state to a pre-operation, an operation, and a post-operation in this order.

The standby state is a state of waiting for an analysis instruction from the operator, the pre-operation is a preparation operation before the analysis, the operation is an analysis operation, and the post-operation is an operation for transitioning to the standby state after the analysis.

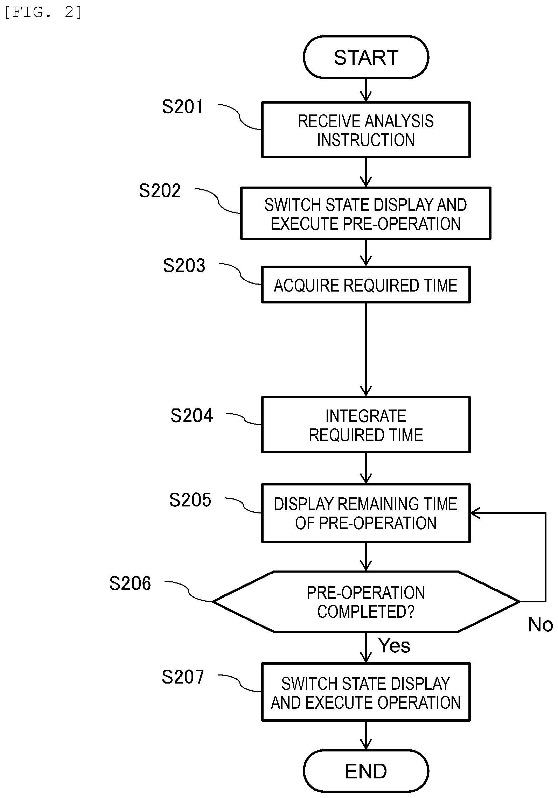

An example of a flow of processing performed in Embodiment 1 will be described for each step with reference to FIG. 2.

### (S201)

The control unit 125 receives an analysis instruction input to the input unit 122.

### (S202)

The control unit 125 switches a state display of the analysis module 111 from a standby state to a pre-operation and causes the analysis module 111 to execute the pre-operation.

### (S203)

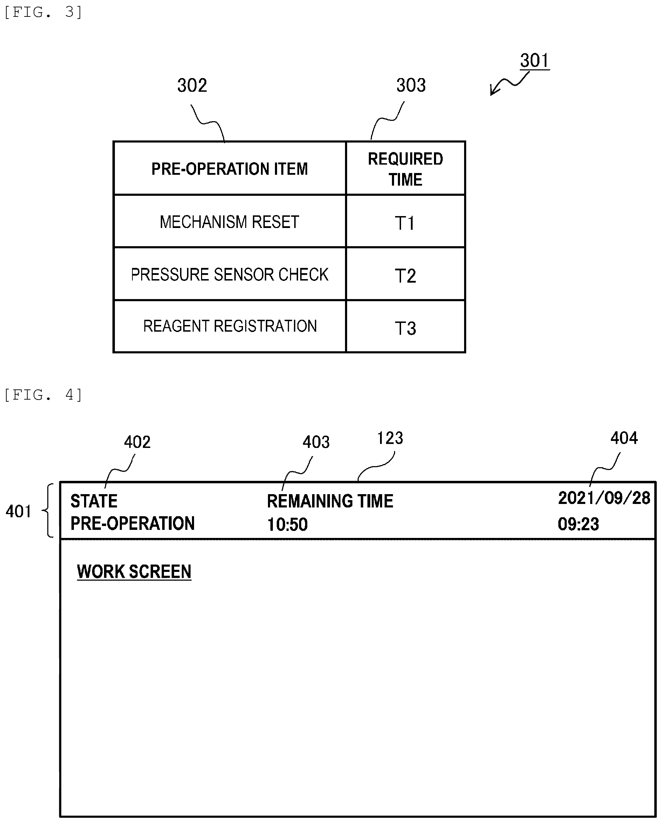

The control unit 125 or the analysis module control unit 119 acquires each required time for each item to be executed as the pre-operation. For example, the required time is read out from a pre-operation table 301 shown in FIG. **3****.** The pre-operation table 301 is a table in which a pre-operation item 302 and a required time 303 are associated with each other, and is stored in advance in the storage unit 124. The pre-operation item 302 includes processing such as mechanism reset, pressure sensor check, and reagent registration.

In the mechanism reset, it is confirmed that various mechanisms such as the specimen dispensing line 112, the specimen dispensing probe 113, the reagent dispensing probe 116, the reagent disk 117, and the reaction disk 115 return to initial positions, and it is determined that there is an abnormality in the mechanism that does not return to the initial position. That is, the mechanism reset is one of operation confirmation of various mechanisms. In the pre-operation table 301 illustrated in FIG. 3, T1 is stored as a time required for the mechanism reset. Since the mechanism reset includes collection of the specimen rack 104 in the analysis module 111, the required time is undetermined until the number of specimen racks 104 is determined.

In the pressure sensor check, a pressure value of a pressure sensor in the specimen dispensing probe 113 or the reagent dispensing probe 116 is confirmed, and if the pressure value is not in a normal range, it is determined that the pressure sensor is abnormal. That is, the pressure sensor check is one of operation confirmation of various mechanisms. In the pre-operation table 301 illustrated in FIG. 3, T2 is stored as a time required for the pressure sensor check.

In the reagent registration, when the reagent bottle is replaced in the standby state, data of the replaced reagent bottle is registered. That is, when the reagent bottle is not replaced, execution of the reagent registration is unnecessary. In the pre-operation table 301 illustrated in FIG. 3, T3 is stored as a time required for the reagent registration. In the reagent registration, since a required time increases as the number of replacement of the reagent bottle increases, the required time is undetermined until the number of replacement is determined.

### (S204)

The control unit 125 or the analysis module control unit 119 calculates a time required to execute the pre-operation by integrating the required times acquired in S203. For example, when the required time is read out from the pre-operation table 301 shown in FIG. 3, the time required to execute the pre-operation is T1 + T2 + T3. When there is no replacement of the reagent bottle, the time required to execute the pre-operation is T1 + T2.

### (S205)

The control unit 125 calculates a remaining time of the pre-operation based on the time calculated in S204, a start time of the pre-operation, and a current time, and displays the calculated remaining time on the display unit 123. That is, the remaining time is calculated by subtracting the current time from a value obtained by adding the time calculated in S204 to the start time of the pre-operation.

An example of a screen for remaining time display will be described with reference to FIG. 4. The screen illustrated in FIG. 4 includes a work screen on which analysis conditions, analysis results, and the like are displayed, and a global screen 401 including a state display unit 402, a remaining time display unit 403, and a date and time display unit 404. The state display unit 402 displays a state of the automatic analyzer 100, the remaining time display unit 403 displays a remaining time, and the date and time display unit 404 displays a current date and time. By checking the screen in FIG. 4, the operator can grasp a remaining time from an end of the pre-operation to start of the analysis, and can therefore leave the automatic analyzer and perform other work during the remaining time. Returning to the description of FIG. 2.

### (S206)

The control unit 125 determines whether the pre-operation is completed. If the pre-operation is not completed, the processing returns to S205, and if the pre-operation is completed, the processing proceeds to S207.

### (S207)

The control unit 125 switches state display of the analysis module 111 from the pre-operation to an operation, and causes the analysis module 111 to execute the operation. At the start of the operation, the display of the remaining time of the pre-operation may be stopped, or the remaining time may be displayed as zero.

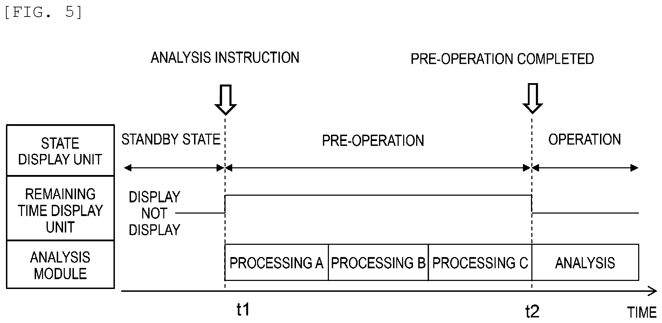

Remaining time display according to Embodiment 1 will be supplementarily shown with reference to FIG. 5. FIG. 5 shows display in the state display unit 402 and the remaining time display unit 403, and a time lapse of processing performed by the analysis module 111.

First, in a standby state before an analysis instruction is given from an operator, the standby state is displayed in the state display unit 402, no remaining state is displayed in the remaining time display unit 403, and there is no processing performed by the analysis module 111.

Next, when an analysis instruction is given from the operator at a time t1, the display of the state display unit 402 is switched to a pre-operation, and the remaining time of the pre-operation is displayed in the remaining time display unit 403. In the analysis module 111, processing A, processing B, and processing C, which are pre-operation items, are sequentially performed.

Then, when the pre-operation is completed at a time t2, the display of the state display unit 402 is switched to an operation, no remaining time is displayed in the remaining time display unit 403, and the analysis module 111 starts analysis.

According to the flow of processing described with reference to FIG. **2****,** the state of the automatic analyzer 100 and the remaining time of the pre-operation are displayed on the display unit 123, so that an operator who leaves the automatic analyzer 100 can return around a start time of the analysis and confirm that the analysis is started without any problems. The remaining time of the pre-operation is calculated based on a time required for operation confirmation of various mechanisms, and thus is obtained more accurately.

### Embodiment 2

In Embodiment **1,** the remaining time display of the pre-operation is described. The remaining time display is not limited to the pre-operation. In Embodiment 2, remaining time display of the post-operation will be described. A configuration of the automatic analyzer 100 is the same as that of Embodiment **1,** and the description thereof is omitted.

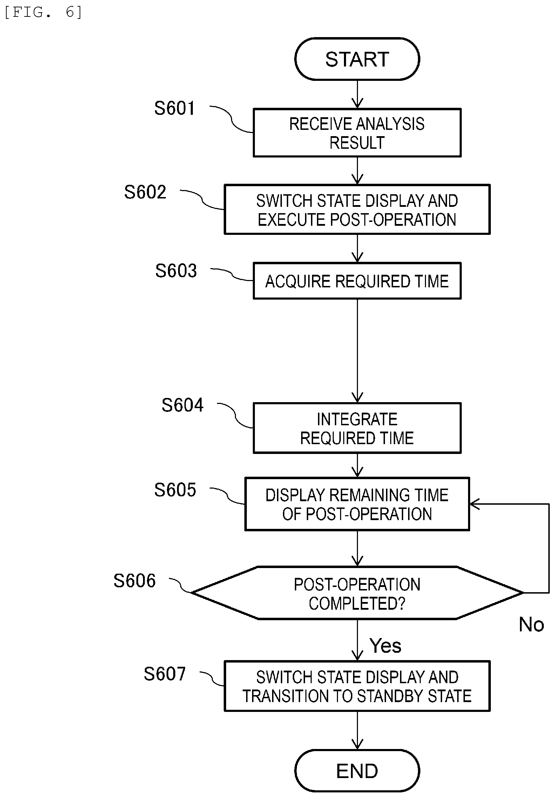

An example of a flow of processing performed in Embodiment 2 will be described for each step with reference to FIG. 6.

### (S601)

The control unit 125 receives an analysis result output from the analysis module 111.

### (S602)

The control unit 125 switches state display of the analysis module 111 from an operation to a post-operation, and causes the analysis module 111 to execute the post-operation.

### (S603)

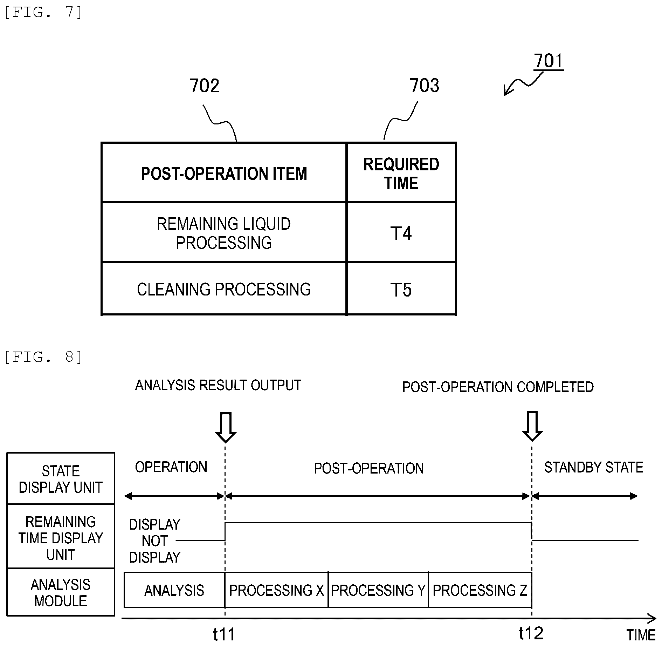

The control unit 125 acquires each required time for each item executed as the post-operation. For example, the required time is read out from a post-operation table 701 shown in FIG. **7****.** The post-operation table 701 is a table in which a post-operation item 702 and a required time 703 are associated with each other, and is stored in advance in the storage unit 124. The post-operation item 702 includes remaining liquid processing, cleaning processing, and the like.

In the remaining liquid processing, the reaction container is cleaned after the reaction liquid after the measurement is aspirated from the reaction container of the reaction disk 115 in the reaction disk cleaning unit 115A. In the post-operation table 701 illustrated in FIG. 7, T4 is stored as a time required for the remaining liquid processing.

In the cleaning processing, the specimen dispensing probe 113 is cleaned in the specimen dispensing probe cleaning tank 113A, and the reagent dispensing probe 116 is cleaned in the reagent dispensing probe cleaning tank 116A. In the post-operation table 701 illustrated in FIG. 7, T5 is stored as a time required for the cleaning processing.

### (S604)

The control unit 125 calculates a time required to execute the post-operation by integrating the required times acquired in S603. For example, when the required time is read out from the post-operation table 701 shown in FIG. 7, the time required to execute the post-operation is T4 + T5. If the remaining liquid processing and the cleaning processing can be performed in parallel, the longer time between T4 and T5, for example, if T4 < T5, T5 is set as the time required to execute the post-operation.

### (S605)

The control unit 125 calculates a remaining time of the post-operation based on the time calculated in S604, a start time of the post-operation, and a current time, and displays the calculated remaining time on the display unit 123. The calculated remaining time is displayed in the remaining time display unit 403 on the screen shown in FIG. 4, for example.

### (S606)

The control unit 125 determines whether the post-operation is completed. If the post-operation is not completed, the processing returns to S605, and if the post-operation is completed, the processing proceeds to S607.

### (S607)

The control unit 125 switches state display of the analysis module 111 from the post-operation to a standby state, and transitions the analysis module 111 to the standby state. At the time of transitioning to the standby state, the display of the remaining time of the post-operation may be stopped, or the remaining time may be displayed as zero.

Remaining time display according to Embodiment 2 will be supplementarily shown with reference to FIG. 8. Similarly to FIG. 5, FIG. 8 shows display in the state display unit 402 and the remaining time display unit 403, and a time lapse of processing performed by the analysis module 111.

First, while the analysis module 111 is executing an analysis operation, an operation is displayed in the state display unit 402, and no remaining time is displayed in the remaining time display unit 403.

Next, when an analysis result is output from the analysis module 111 at a time t11, the display of the state display unit 402 is switched to a post-operation, and a remaining time of the post-operation is displayed in the remaining time display unit 403. In the analysis module 111, processing X, processing Y, and processing Z, which are items of the post-operation, are sequentially performed.

When the post-operation is completed at a time t12, the display of the state display unit 402 is switched to a standby state, no remaining time is displayed in the remaining time display unit 403, and the analysis module 111 is in the standby state.

According to the flow of processing described with reference to FIG. 6, the state of the automatic analyzer 100 and the remaining time of the post-operation are displayed on the display unit 123, so that an operator who leaves the automatic analyzer 100 can return around a time when the automatic analyzer 100 transitions to the standby state, prepare for the next analysis, or the like.

### Embodiment 3

In Embodiment 1, the remaining time displayed when the required time for each item of the pre-operation is determined is described. In Embodiment 3, the remaining time displayed when a required time for each item of the pre-operation is not determined will be described. The configuration of the automatic analyzer 100 is the same as that of Embodiment 1, and the description thereof is omitted.

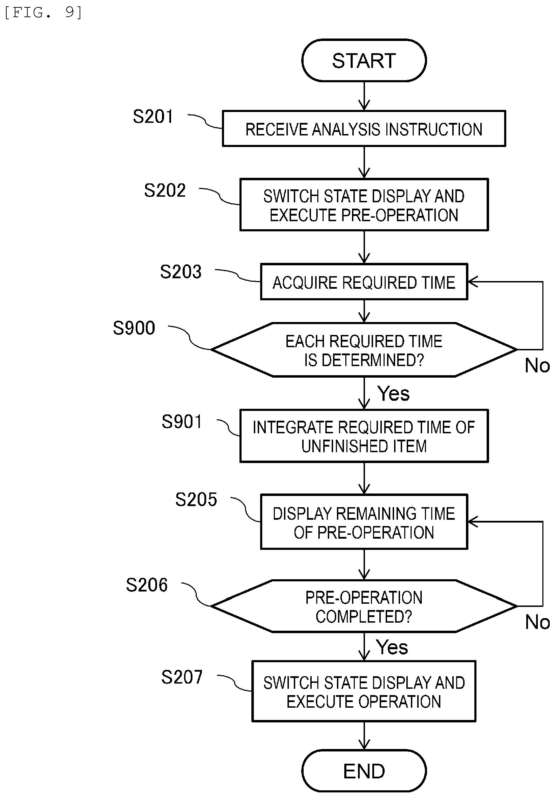

An example of a flow of processing performed in Embodiment 3 will be described for each step with reference to FIG. **9****.** The description of the same processing as in Embodiment 1 is simplified.

### (S201) to (S203)

As in Embodiment 1, when the control unit 125 receives an analysis instruction, the control unit 125 acquires a required time for each item while causing the analysis module 111 to execute a pre-operation.

### (S900)

The control unit 125 determines whether all required times acquired in S203 are determined. That is, in the mechanism reset, the required time is undetermined until the number of specimen racks 104 in the analysis module 111 is determined, and in the reagent registration, the required time is undetermined until the number of replacement of the reagent bottles is determined. If the required time is not determined, the processing returns to S203, and if all required times are determined, the processing proceeds to S901.

### (S901)

The control unit 125 calculates a time required to execute the pre-operation by integrating required times of unexecuted items.

### (S205) to (S207)

As in Embodiment 1, the control unit 125 displays the remaining time of the pre-operation on the display unit 123, and causes the analysis module 111 to execute an operation when the pre-operation is completed.

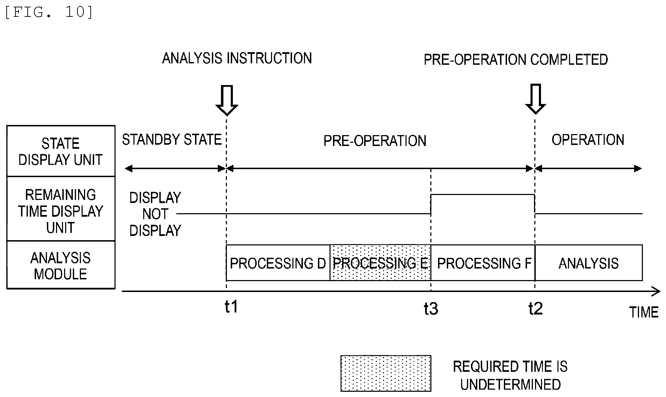

Remaining time display according to Embodiment 3 will be supplementarily shown with reference to FIG. 10. Similarly to FIG. 5, FIG. 10 shows display in the state display unit 402 and the remaining time display unit 403, and a time lapse of processing performed by the analysis module 111.

First, in a standby state, the standby state is displayed in the state display unit 402, no remaining time is displayed in the remaining time display unit 403, and there is no processing performed by the analysis module 111.

Next, when an analysis instruction is given from the operator at the time t1, the display of the state display unit 402 is switched to a pre-operation. Among processing D, processing E, and processing F which are items of the pre-operation, a required time for the processing E is undetermined, so no remaining time is displayed in the remaining time display unit 403.

When the processing E, whose required time is undetermined, is completed at a time t3, the remaining time calculated by determining a required time for the pre-operation is displayed in the remaining time display unit 403.

Further, when the pre-operation is completed at the time t2, the display of the state display unit 402 is switched to an operation, no remaining time is displayed in the remaining time display unit 403, and the analysis module 111 starts analysis.

According to the flow of processing described with reference to FIG. **9****,** the state of the automatic analyzer 100 is displayed, and after the remaining time of the pre-operation is determined, the remaining time is displayed on the display unit 123, so that an operator who leaves the automatic analyzer 100 can return around a start time of the analysis and confirm that the analysis is started without any problems. The remaining time of the pre-operation is calculated based on a time required for operation confirmation of various mechanisms, and thus is obtained more accurately. When the required time for each item of the pre-operation is not determined, the remaining time display is not limited to the flow of the processing in FIG. 9.

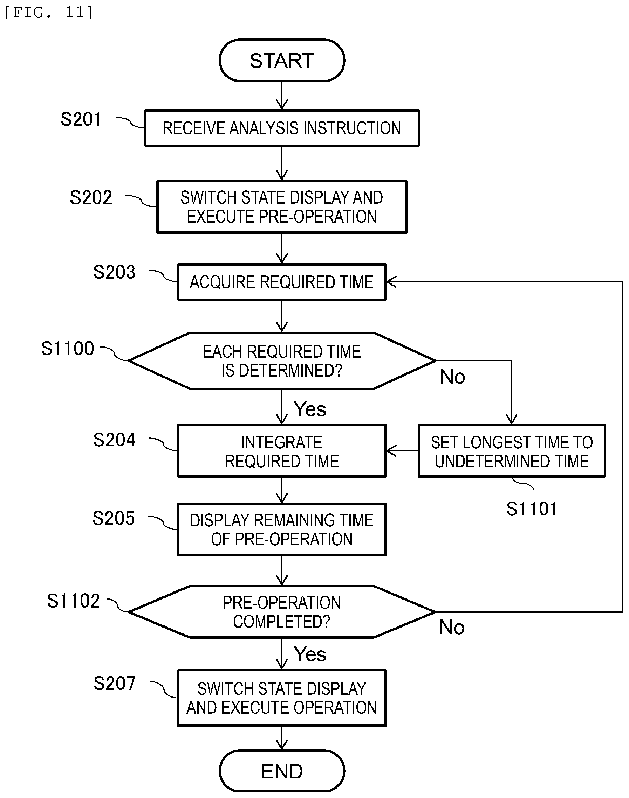

Another example of the flow of the processing performed in Embodiment 3 will be described for each step with reference to FIG. 11. The description of the same processing as in Embodiment 1 is simplified.

### (S201) to (S203)

As in Embodiment 1, when the control unit 125 receives an analysis instruction, the control unit 125 acquires a required time for each item while causing the analysis module 111 to execute a pre-operation.

### (S1100)

The control unit 125 determines whether all required times acquired in S203 are determined. If the required time is not determined, the processing proceeds to S1101, and if all required times are determined, the processing proceeds to S204.

### (S1101)

The control unit 125 sets the longest time for an item for which required time is not determined. The longest time is stored in the storage unit 124 in advance for each item.

### (S204) and (S205)

As in Embodiment **1,** the control unit 125 displays, on the display unit 123, a remaining time of the pre-operation calculated based on an integrated value of each required time.

### (S1102)

The control unit 125 determines whether the pre-operation is completed. If the pre-operation is not completed, the processing returns to S203, and if the pre-operation is completed, the processing proceeds to S207.

### (S207)

As in Embodiment 1, the control unit 125 switches the state display of the analysis module 111 to an operation and causes the analysis module 111 to execute the operation.

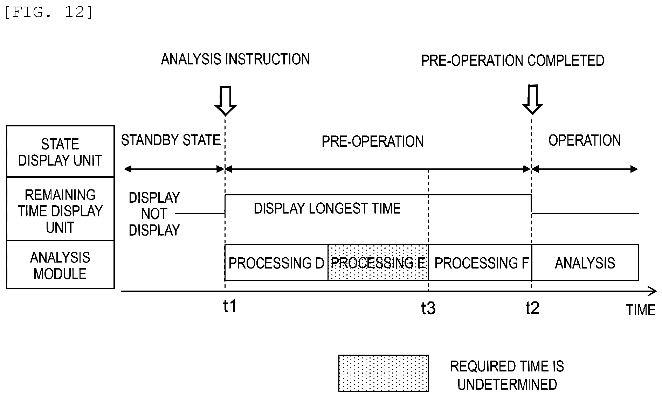

Remaining time display according to Embodiment 3 will be supplementarily shown with reference to FIG. 12. Similarly to FIG. 5, FIG. 12 shows display in the state display unit 402 and the remaining time display unit 403, and a time lapse of processing performed by the analysis module 111.

First, in a standby state, the standby state is displayed in the state display unit 402, no remaining time is displayed in the remaining time display unit 403, and there is no processing performed by the analysis module 111.

Next, when an analysis instruction is given from the operator at a time t1, the display of the state display unit 402 is switched to a pre-operation, and the remaining time of the pre-operation is displayed in the remaining time display unit 403. Among the processing D, the processing E, and the processing F which are items of the pre-operation, a required time for the processing E is undetermined, so the longest time is displayed in the remaining time display unit 403.

When the processing E, whose required time is undetermined, is completed at a time t3, the remaining time calculated by determining a required time for the pre-operation is displayed in the remaining time display unit 403.

Further, when the pre-operation is completed at the time t2, the display of the state display unit 402 is switched to an operation, no remaining time is displayed in the remaining time display unit 403, and the analysis module 111 starts analysis.

According to the flow of processing described with reference to FIG. 11, the state of the automatic analyzer 100 is displayed, and the remaining time is displayed on the display unit 123 even if a required time for each item of the pre-operation is not determined, so that an operator who leaves the automatic analyzer 100 can return around a start time of the analysis and confirm that the analysis is started without any problems. The remaining time of the pre-operation after the required time is determined is calculated based on a time required for operation confirmation of various mechanisms, and thus can be obtained more accurately.

In FIG. **9****,** the remaining time is not displayed until the required time is determined, but a more accurate remaining time is displayed, and in FIG. 11, the longest time is displayed until the required time is determined, but the remaining time is displayed from a time when the analysis instruction is issued, so each has its advantages and disadvantages. Therefore, it may be possible to allow the operator to select either one in advance. When the required time for each item of the post-operation is not determined, a similar form as that of Embodiment 3 may be adopted.

### Embodiment 4

In Embodiment 1, the remaining time display when a single analysis module 111 is provided has been described. In Embodiment **4,** remaining time display when a plurality of analysis modules 111 are provided will be described. The configuration of the automatic analyzer 100 is the same as that of Embodiment 1 except for the number of analysis modules 111, and the description thereof is omitted.

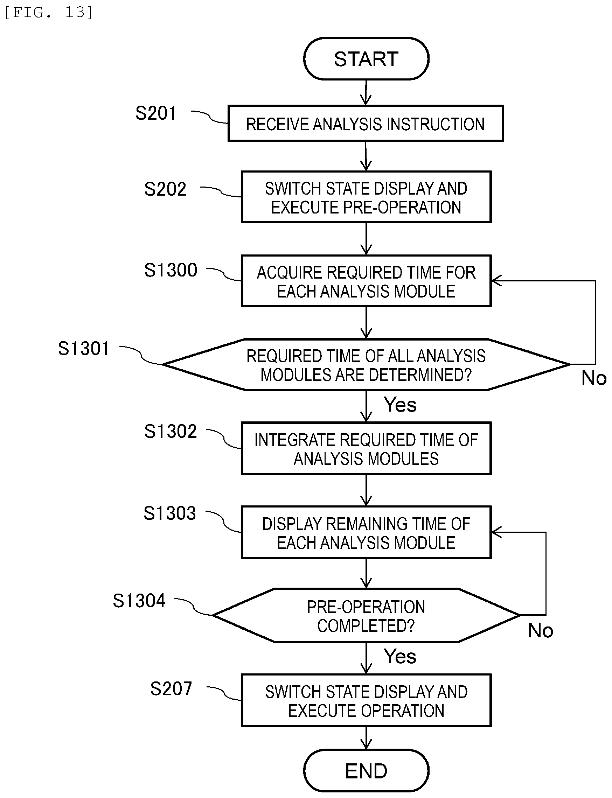

An example of a flow of processing performed in Embodiment 4 will be described for each step with reference to FIG. 13. The description of the same processing as in Embodiment 1 is simplified.

### (S201) and (S202)

As in Embodiment 1, when the control unit 125 receives an analysis instruction, the control unit 125 switches state display and causes the analysis module 111 to execute a pre-operation.

### (S1300)

The control unit 125 acquires, for each analysis module 111, a time required for each item to be executed as a pre-operation.

### (S1301)

The control unit 125 determines whether all required times acquired in S1300 are determined. If the required time is not determined, the processing returns to S1300, and if all required times are determined, the processing proceeds to S1302.

### (S1302)

The control unit 125 calculates a time required to execute the pre-operation for each analysis module 111 by integrating the required times acquired in S1301 for each analysis module 111.

### (S1303)

The control unit 125 calculates a remaining time of the pre-operation for each analysis module 111 based on a time calculated for each analysis module 111 in S1302, a start time of the pre-operation, and a current time, and displays the calculated remaining time on the display unit 123.

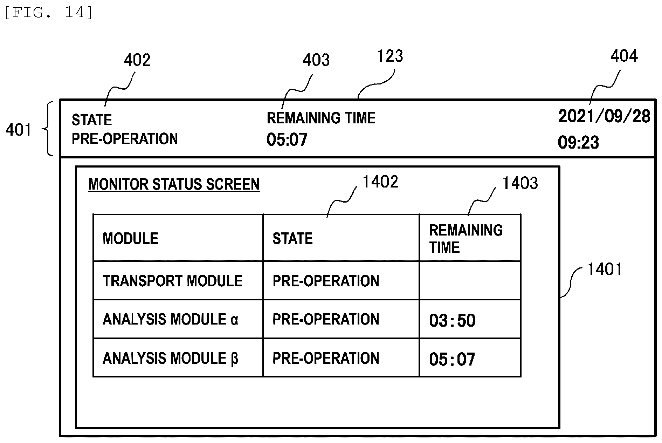

An example of a screen for displaying the remaining time will be described with reference to FIG. 14. A screen illustrated in FIG. 14 includes a global screen 401 similarly to the screen in FIG. 4, and further includes a monitor status screen 1401. In the monitor status screen 1401, a state of each module is displayed in the module state display unit 1402, and a remaining time of each module is displayed in the remaining time display unit 1403. The longest remaining time among remaining times of the modules is displayed in the remaining time display unit 403. In FIG. 14, since remaining time 05: 07 of an analysis module β is longer than remaining time 03: 50 of an analysis module α, and the remaining time 05: 07 of the analysis module β is displayed in the remaining time display unit 403. By checking the screen in FIG. 14, the operator can grasp the remaining time until the analysis is started together with the remaining time of each module, and can therefore leave the automatic analyzer and perform other work during the remaining time. Returning to the description of FIG. 13.

### (S1304)

The control unit 125 determines whether the pre-operation of all the analysis modules 111 is completed. If the pre-operation is not completed, the processing returns to S1303, and if the pre-operation is completed, the processing proceeds to S207.

### (S207)

As in Embodiment 1, the control unit 125 switches the state display of the analysis module 111 to an operation and causes the analysis module 111 to execute the operation.

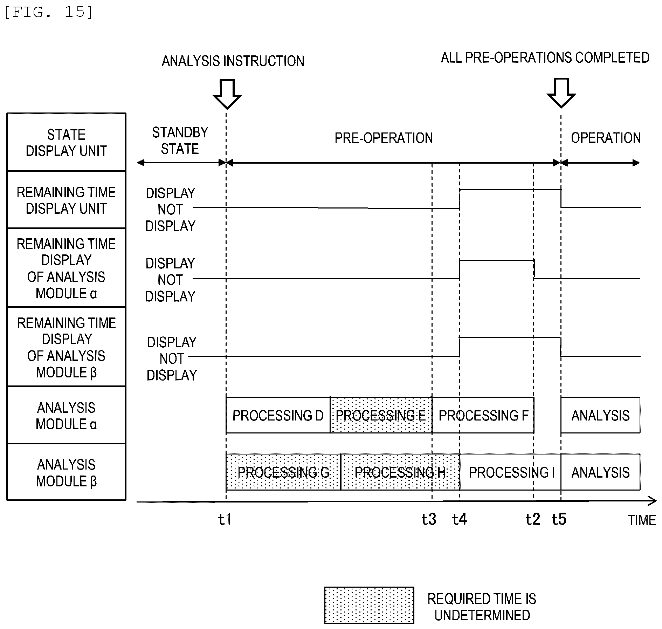

Remaining time display according to Embodiment 4 will be supplementarily shown with reference to FIG. 15. FIG. 15 shows display in the state display unit 402 and the remaining time display unit 403, remaining time display of the analysis module α and the analysis module β, and a time lapse of processing being executed.

First, in a standby state, the standby state is displayed in the state display unit 402, no remaining time is displayed in the remaining time display unit 403, the analysis module α, and the analysis module β, and no processing is performed by the analysis module α and the analysis module β.

Next, when an analysis instruction is given from the operator at the time t1, the display of the state display unit 402 is switched to a pre-operation. Among processing D, processing E, and processing F performed by the analysis module α and processing G, processing H, and processing I performed by the analysis module β, required times for the processing E, the processing G, and the processing H are undetermined, so that no remaining time is displayed in the remaining time display unit 403.

Then, when the processing E, the processing G, and the processing H, whose required times are undetermined, are completed at a time t4, remaining times calculated by determining required times of the pre-operation are displayed in the remaining time display unit 403, and the remaining time display of the analysis module α and the analysis module β.

When the pre-operation of the analysis module α is completed at the time t2, the remaining time display of the analysis module α is stopped.

When the pre-operation of the analysis module β is completed at a time t5, the display of the state display unit 402 is switched to an operation, no remaining time is displayed in the remaining time display of the analysis module β and the remaining time display unit 403, and the analysis is started in the analysis module α and the analysis module β.

According to the flow of processing described with reference to FIG. 13, the state of the automatic analyzer 100 is displayed, and the remaining time of each analysis module and the remaining time in the automatic analyzer 100 are displayed on the display unit 123. Therefore, the operator who leaves the automatic analyzer 100 can return around a start time of the analysis and confirm that the analysis is started without any problems. The remaining time of the pre-operation is calculated based on a time required for operation confirmation of various mechanisms, and thus is obtained more accurately. The remaining time display of the post-operation may take a similar form as in Embodiment 4.

The embodiments of the invention have been described above. The invention is not limited to the above-described embodiments, and the components may be modified without departing from the gist of the invention. The plurality of components disclosed in the above-described embodiments may be combined as appropriate. Further, some components may be deleted from all the components disclosed in the above-described embodiments.

### Reference Signs List

- 100:: automatic analyzer
- 101:: transport module
- 102:: rack supply tray
- 103:: rack buffer
- 104:: specimen rack
- 105:: transport line
- 106:: rack storage tray
- 111:: analysis module
- 112:: specimen dispensing line
- 113:: specimen dispensing probe
- 113A:: specimen dispensing probe cleaning tank
- 114:: electrolyte measurement unit
- 115:: reaction disk
- 115A:: reaction disk cleaning unit
- 116:: reagent dispensing probe
- 116A:: reagent dispensing probe cleaning tank
- 117:: reagent disk
- 118:: biochemical measurement unit
- 119:: analysis module control unit
- 121:: operation module
- 122:: input unit
- 123:: display unit
- 124:: storage unit
- 125:: control unit
- 301:: pre-operation table
- 302:: pre-operation item
- 303:: required time
- 401:: global screen
- 402:: state display unit
- 403:: remaining time display unit
- 404:: date and time display unit
- 701:: post-operation table
- 702:: post-operation item
- 703:: required time
- 1401:: monitor status screen
- 1402:: module state display unit
- 1403:: remaining time display unit

## Claims

1. An automatic analyzer comprising:
an analysis module configured to analyze a sample;
a control unit configured to control the analysis module; and
a display unit configured to display a state of the analysis module, wherein
the control unit performs control to calculate remaining time until a pre-operation is completed based on time required for operation confirmation of various mechanisms of the analysis module and display the remaining time on the display unit.

2. The automatic analyzer according to claim 1, wherein
the control unit performs control to stop displaying the remaining time at start of the analysis, newly calculate remaining time until a post-operation is completed based on time required for cleaning processing and remaining liquid processing to be performed after the analysis is completed, and display the newly calculated remaining time on the display unit.

3. The automatic analyzer according to claim **1,** wherein
the control unit performs control to display the remaining time on the display unit after the time required for the operation confirmation of the various mechanisms is determined.

4. The automatic analyzer according to claim **1,** wherein
the control unit performs control to display a longest time of the remaining time on the display unit until the time required for the operation confirmation of the various mechanisms is determined.

5. The automatic analyzer according to claim **1,** wherein
the control unit performs control to calculate the remaining time until the pre-operation is completed for each of a plurality of analysis modules and display the remaining time of each analysis module on the display unit.

6. The automatic analyzer according to claim **5,** wherein
the control unit performs control to display a longest remaining time among the remaining times of the respective analysis modules on the display unit as remaining time until start of the analysis.

7. An automatic analyzer comprising:
an analysis module configured to analyze a sample;
a control unit configured to control the analysis module; and
a display unit configured to display a state of the analysis module, wherein
the control unit performs control to calculate remaining time until a post-operation is completed based on time required for cleaning processing and remaining liquid processing to be performed after the analysis is completed, and display the remaining time on the display unit.

8. A control method of an automatic analyzer including an analysis module configured to analyze a sample and a display unit configured to display a state of the analysis module, the control method comprising:
calculating remaining time until a pre-operation is completed based on time required for operation confirmation of various mechanisms of the analysis module; and
displaying the remaining time on the display unit.
